# FASCICULE DE BREVET EUROPEEN

(11) **EP 0 885 134 B1**
(45) Date de publication et mention de la délivrance du brevet: **03.04.2002**
(21) Numéro de dépôt: 97910438.7
(22) Date de dépôt: 13.10.1997
(51) Int. Cl.: B60C 9/22, B60C 9/18, B60C 9/20

(54) **ARMATURE DE SOMMET POUR PNEUMATIQUE "POIDS-LOURDS" DE RAPPORT DE FORME 0,60**
SCHEITELBEWEHRUNG FÜR SCHWERLASTREIFEN MIT EINEM FORMVERHÄLTNIS H/S (HÖHE/BREITE) 0,60.
BREAKER FOR HEAVY ROAD VEHICLE TYRE WITH FORM RATIO 0.60

(30) Priorité: 23.10.1996 FR 9613021
(43) Date de publication de la demande: 23.12.1998
(73) Titulaire: Compagnie Générale des Etablissements MICHELIN-MICHELIN & CIE, 63040 Clermont-Ferrand Cedex 09 (FR)
(72) Inventeur: CLUZEL, Guy, F-63110 Beaumont (FR)
(74) Mandataire: Devaux, Edmond-Yves
(86) Numéro de dépôt international: EP9705625
(87) Numéro de publication internationale: WO9817485

(56) Documents cités:
- EP-A- 0 173 101
- EP-A- 0 192 910
- EP-A- 0 326 123
- FR-A- 2 222 232
- FR-A- 2 566 334
- US-A- 4 262 726

## Description

La présente invention concerne un pneumatique à armature de carcasse radiale de faible rapport de forme H/S, pneumatique particulièrement destiné à équiper un véhicule routier lourd.

Un tel pneumatique dit "Poids-Lourds" comprend une armature de carcasse radiale, formée généralement d'une simple nappe de câbles métalliques radiaux, préférentiellement en acier, ladite nappe étant ancrée dans chaque bourrelet à au moins une tringle, elle-même métallique avec une constitution et une forme adaptées à l'inclinaison du siège de bourrelet, pour former un retournement. L'ossature du pneumatique est complétée par une armature de sommet frettant l'armature de carcasse. Ladite armature de sommet est généralement composée, en allant radialement de l'armature de carcasse à l'extérieur, d'une nappe ou de deux demi-nappes dites de triangulation, de deux nappes dites sommet de travail et d'une ou deux nappes dites de protection. La ou les demi-nappes de triangulation, ayant pour objet d'éviter le passage en compression des câbles sous-jacents de l'armature de carcasse, sont formées de câbles métalliques inextensibles faisant avec la direction circonférentielle un angle élevé, pouvant être compris entre 50° et 90°. Les nappes sommet de travail sont formées de câbles métalliques inextensibles, croisés d'une nappe à la suivante en formant avec la direction circonférentielle des angles, égaux ou inégaux, généralement faibles compris entre 15° et 35°. Quant aux nappes de protection, elles sont formées de câbles élastiques faisant avec la direction circonférentielle des angles de valeur semblable à celle des angles des câbles des nappes de travail.

Une telle structure d'armature de sommet est très largement exploitée dans les pneumatiques "Poids-Lourds" de rapport de forme H/S ≥ 0,8, et donne entière satisfaction. Par contre, elle est, pour de multiples raisons, difficilement applicable à des pneumatiques de rapport de forme H/S < 0,60.

En vue de résoudre un des problèmes posés, à savoir la maîtrise du profil méridien de la bande de roulement, il a été proposé, par exemple dans le brevet FR 2 566 334, de remplacer la(les) nappe(s) de triangulation par une nappe de câbles inextensibles circonférentiels ou quasi-circonférentiels, et dont les extrémités axiales sont axialement à l'extérieur des extrémités des deux nappes de câbles croisés, qui complètent l'armature de sommet du pneumatique décrit dans le brevet cité.

Pour les mêmes raisons que précédemment, le brevet FR 2 419 185 préconise l'emploi de deux armatures de frettage situées de part et d'autre du plan équatorial, chaque armature étant composée de deux nappes de faible largeur et de câbles métalliques inextensibles croisés d'une nappe à la suivante en faisant avec la direction circonférentielle un angle préférentiellement faible de 5° à 10°.

Si de telles structures d'armature de sommet présentent l'avantage de diminuer fortement les risques de séparation entre les extrémités des nappes de travail, en même temps qu'elles permettent d'éviter la naissance au gonflage de la forme concave de la bande de roulement, par contre, elles ne présentent pas une efficacité suffisante en vue de remédier à un problème spécifique des dimensions de pneumatique considéré, à savoir les risques de passage en compression des câbles de la nappe de carcasse, une nappe de câbles circonférentiels n'étant d'aucune efficacité pour résoudre un tel problème.

Porter remède aux inconvénients ci-dessus peut être réalisé par différents moyens, par exemple, par le redimensionnement des câbles de la nappe de carcasse de manière à les rendre plus résistants à la fatigue par compression. Un autre moyen consiste à maîtriser la contraction transversale de l'armature de sommet. Les moyens actuels connus, consistant de manière générale à accroître la masse métallique des armatures, conduisent à une augmentation du prix de revient du pneumatique.

Afin de remédier aux inconvénients ci-dessus, le pneumatique de rapport de forme H/S < 0,60, conforme à l'invention, et comprenant principalement une armature de carcasse composée d'au moins une nappe de câbles radiaux, une armature de sommet composée d'au moins deux nappes dites de travail de câbles métalliques inextensibles croisés d'une nappe à la suivante en faisant avec la direction circonférentielle des angles compris entre 15° et 35° et d'au moins une nappe de câbles circonférentiels disposée entre la nappe de câbles radiaux la plus extérieure et la première nappe sommet de travail radialement la plus à l'intérieur, ladite nappe de câbles circonférentiels ayant des extrémités axialement au delà des extrémités des nappes de travail et ladite armature de sommet étant surmontée d'une bande de roulement de largeur L, caractérisé en ce qu'est disposée, entre la nappe de câbles circonférentiels, de largeur L20 comprise entre 0,8 et 0,95L, et la première nappe de travail radialement la plus à l'intérieur, de largeur L21 comprise entre 0,5 et 0,7 L, une couche de mélange caoutchouteux de faible module d'extension, d'épaisseur constante comprise entre 2 et 3 mm et ayant une largeur LM égale à L21, alors que la deuxième nappe de travail radialement la plus à l'extérieur, de largeur axiale L22, supérieure à la largeur L21, est séparée radialement du bord de la nappe de câbles circonférentiels, d'une part par un coussin de caoutchouc de fort module d'extension, s'étendant axialement de l'extrémité de la première nappe de travail au delà de l'extrémité de la nappe de câbles circonférentiels, d'épaisseur pratiquement égale à l'épaisseur totale de la première nappe de travail et de la couche de caoutchouc à bas module, et d'autre part, radialement à l'extérieur dudit coussin, par un coin de caoutchouc de module intermédiaire entre le bas module et le fort module et s'étendant axialement sensiblement du bord de la deuxième nappe de travail à un point axialement à l'intérieur de l'extrémité de la première nappe de travail d'une quantité comprise entre 0,03 et 0,10 fois la largeur L21, ledit coin permettant le découplage des bords des nappes de travail.

Il faut entendre par mélange de caoutchouc, évidemment vulcanisé, à bas module d'extension un mélange dont ledit module sécant à 10% d'allongement relatif est compris entre 3,3 et 3,7 MPa. Un mélange à fort module d'extension aura un module, mesuré dans les mêmes conditions, compris entre 10 et 20 MPa, alors qu'un mélange à module intermédiaire entre les deux précédents aura un module, du même nom et mesuré dans les mêmes conditions, compris entre 6 et 9 MPa.

La combinaison des largeurs, respectivement de la nappe de câbles circonférentiels et des nappes sommet de travail, avec l'arrangement optimisé en qualité et localisation des couches de caoutchouc entre les différentes nappes sommet de travail permet non seulement d'éviter les risques de mise en compression des câbles de la nappe de carcasse normalement conçue, mais aussi d'améliorer la résistance à la séparation entre les bords des nappes de travail, du fait du blocage sous effort transversal du complexe formé par la nappe de câbles circonférentiels, la couche de caoutchouc radialement au-dessus et la première nappe de travail, alors que les bords desdites nappes de travail sont séparées par du caoutchouc ayant un module d'extension usuel, contrairement à un certain enseignement (voir le brevet FR 1 290 231) préconisant la séparation de tels bords par un coin de gomme de forte dureté.

La séparation entre nappes de travail peut, dans le cadre de l'invention, être améliorée d'une part par la présence radialement au dessus de la deuxième nappe de travail radialement la plus à l'extérieur d'une nappe de câbles élastiques orientés dans la même direction que celle des câbles de la deuxième nappe de travail sous-jacente, mais de largeur axiale L23 supérieure à L22 et inférieure à L20. Ladite nappe de protection est alors avantageusement séparée du complexe décrit ci-dessus par un coin de mélange caoutchouteux de bas module d'extension, identique au module de la couche caoutchouteuse située entre la nappe de câbles circonférentiels et la première nappe de travail.

Les caractéristiques et avantages de la présente invention seront mieux compris à l'aide de la description qui suit et qui se réfère au dessin illustrant à titre non limitatif un exemple d'exécution, dessin sur lequel :

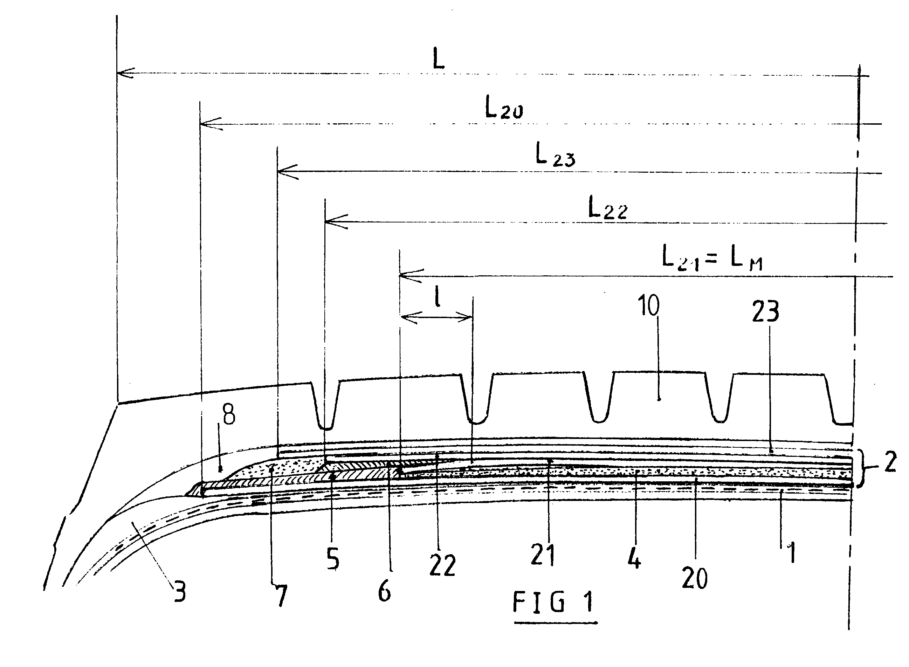

- La figure 1 représente schématiquement, en section méridienne, la partie haute d'un pneumatique conforme à l'invention,

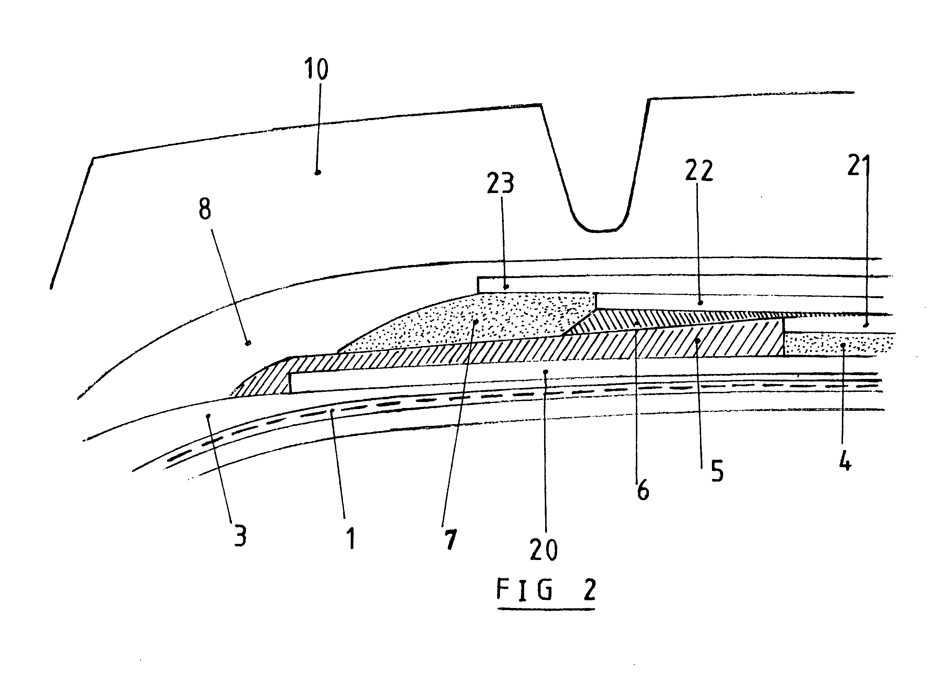

- La figure 2 étant un agrandissement de la partie cerclée de la figure 1.

Le pneumatique conforme à l'invention de dimension 495/45 - 22.5 a un rapport de forme H/S sensiblement égal à 0,45, H étant la hauteur du pneumatique sur jante et S la largeur axiale maximale dudit pneumatique monté sur sa jante de service 22.5 x 17.00 et gonflé à une pression recommandée de 9 bars.

Ledit pneumatique comprend principalement une armature de carcasse formée, dans le cas décrit, d'une seule nappe (1) de câbles métalliques en acier, susceptibles de résister à une force de tension très nettement supérieure à la force de tension générée par la pression de gonflage du pneumatique. Cette nappe de carcasse (1), isolée du gaz de gonflage par les couches de caoutchouc intérieures, comme connu en soi, est surmontée radialement à l'extérieur par une armature de sommet (2). Ladite armature de sommet (2) est constituée, en allant radialement de l'intérieur à l'extérieur, d'une nappe (20), dite nappe sommet de frettage, formée de câbles métalliques en acier dont le module permet de conférer à ladite nappe (20) une rigidité d'extension par unité de largeur comprise entre 3300 et 9000 daN/mm (la rigidité d'extension est le rapport de la force d'extension appliquée à l'unité de largeur de la nappe pour obtenir une élongation donnée dans la direction des câbles circonférentiels). La nappe (20) a une largeur L20 de 380 mm, soit 0,90 fois la largeur L de la bande de roulement (10) du pneumatique. Elle est séparée radialement à l'extérieur de la première nappe de travail (21) par une couche de mélange caoutchouteux (4). La nappe (21) est formée de câbles métalliques en acier inextensibles, lui permettant d'avoir une rigidité à l'extension par unité de largeur, perpendiculairement à la direction des câbles, comprise entre 5500 et 8000 daN/mm, et faisant avec la direction circonférentielle un angle de 18 °D. La nappe (21) a une largeur L21 égale à 260 mm, soit 0,6 fois la largeur L de la bande de roulement (10). La couche de mélange caoutchouteux (4) a une largeur LM exactement égale à la largeur L21, a une épaisseur e constante sur ladite largeur et égale à 2,5 mm et possède un module d'extension à 10% d'allongement relatif égal à 3,5 MPa.

Axialement à l'extérieur des extrémités de la première nappe de travail (21) et de la couche (4), est disposée sur la nappe (20) de câbles circonférentiels un coussin (5) de mélange de caoutchouc pouvant avoir une épaisseur constante ou décroissante avec l'éloignement par rapport aux extrémités ci-dessus et une largeur telle que ledit coussin recouvre l'extrémité de la nappe (20). Ledit coussin (5) a un module d'extension élevé et égal à 12 MPa.

La première nappe sommet de travail (21) est surmontée radialement à l'extérieur d'une deuxième nappe de travail (22), formée des mêmes câbles métalliques en acier que ceux de la nappe de travail (21) et ayant en conséquence la même rigidité d'extension par unité de largeur, lesdits câbles faisant avec la direction circonférentielle un angle de 18 °G. La larguer L22 de la deuxième nappe de travail radialement extérieure (22) est supérieure à la largeur L21 de 50 mm, d'où une distance axiale de 25 mm séparant chaque extrémité de la première nappe (21) de chaque extrémité de la deuxième nappe (22). La différence entre les largeurs L21 et L22 peut être comprise entre 25 et 55 mm.

Entre la première nappe de travail (21) et la deuxième nappe de travail (22) se trouve un coin de mélange caoutchouteux (6) de forme triangulaire et disposé de manière qu'il soit inséré entre les bords desdites nappes de travail sur une largeur axiale l correspondant à 6% de la largeur L21 de la première nappe de travail (21) la plus courte et de manière qu'il recouvre le coussin (5) de caoutchouc à haut module sur la distance axiale séparant les extrémités de la première nappe de travail (21) et de la deuxième nappe de travail (22) respectivement. Ledit coin de caoutchouc (6) possède un module d'extension de 7,5 MPa.

La nappe dite de protection (23) complète l'armature de sommet. Composée de câbles métalliques dits élastiques, c'est-à-dire présentant sous une force égale à 10% de la charge de rupture un allongement relatif au moins égal à 2 %, faisant avec la direction circonférentielle un angle égal à l'angle que font les câbles de la deuxième nappe de travail (22), la nappe (23) a une largeur égale à 335 mm, c'est-à-dire supérieure à L22 mais inférieure à L20. Elle est séparée du coussin (5) de caoutchouc par un deuxième coin (7) de mélange caoutchouteux ayant un module d'extension égal au module de la couche (4) séparant la nappe (20) de câbles circonférentiels de la première nappe de travail (21) radialement intérieure. Afin de réduire le plus possible l'échauffement du pneumatique, l'armature de sommet (2) est coiffée d'une couche (8) de mélange caoutchouteux à faible hystérèse, c'est-à-dire une hystérèse égale à la moitié de l'hystérèse de la bande de roulement. La dite couche (8) est elle-même surmontée radialement de la bande de roulement (10).

## Revendications

1. Pneumatique, de rapport de forme H/S < 0,60, comprenant principalement une armature de carcasse composée d'au moins une nappe (1) de câbles radiaux, une armature de sommet (2) composée d'au moins deux nappes (21,22), dites de travail, de câbles métalliques inextensibles croisés et d'au moins une nappe (20) de câbles circonférentiels, disposée entre la nappe (1) de câbles radiaux la plus extérieure et la première nappe sommet de travail (21) radialement la plus à l'intérieur, ladite nappe de câbles circonférentiels (20) ayant des extrémités axialement au delà des extrémités des nappes de travail (21,22) et ladite armature de sommet (2) étant surmontée d'une bande de roulement (10) de largeur L, **caractérisé en ce qu'**est disposée, entre la nappe de câbles circonférentiels (20), de largeur L20 comprise entre 0,8 et 0,95 L, et la première nappe de travail (21) radialement la plus à l'intérieur, de largeur L21 comprise entre 0,5 et 0,7 L, une couche de mélange caoutchouteux (4) de faible module d'extension, d'épaisseur constante comprise entre 2 et 3 mm et ayant une largeur LM égale à L21, alors que la deuxième nappe de travail (22) radialement la plus à l'extérieur, de largeur axiale L22, supérieure à la largeur L21, est séparée radialement du bord de la nappe de câbles circonférentiels (20), d'une part par un coussin de caoutchouc (5) de fort module d'extension, s'étendant axialement de l'extrémité de la première nappe de travail (21) au delà de l'extrémité de la nappe de câbles circonférentiels (20), d'épaisseur pratiquement égale à l'épaisseur totale de la première nappe de travail (21) et de la couche de caoutchouc (4) à bas module, et d'autre part, radialement à l'extérieur dudit coussin (5), par un coin de caoutchouc (6) de module intermédiaire entre le bas module et le fort module et s'étendant axialement sensiblement du bord de la deuxième nappe de travail (22) à un point axialement à l'intérieur de l'extrémité de la première nappe de travail (21) d'une quantité comprise entre 0,03 et 0,10 fois la largeur L21, ledit coin (6) permettant le découplage des bords des nappes de travail (21) et (22).

2. Pneumatique selon la revendication 1, **caractérisé en ce que** l'armature de sommet (2) est complétée par la présence, radialement au dessus de la deuxième nappe de travail (22) radialement la plus à l'extérieur, d'une nappe (23) de câbles élastiques orientés dans la même direction que celle des câbles de la deuxième nappe de travail sous-jacente (22), mais de largeur axiale L23 supérieure à L22 et inférieure à L20, ladite nappe de protection (23) étant alors séparée du coussin (5) par un coin de mélangé caoutchouteux (7) de bas module d'extension, identique au module de la couche caoutchouteuse (4), située entre la nappe de câbles circonférentiels (20) et la première nappe de travail (21) radialement la plus à l'intérieur.

## Patentansprüche

1. Reifen mit einem Formverhältnis H/S von < 0,60, der in erster Linie eine Karkassenbewehrung, die aus mindestens einer Lage (1) aus Radialseilen zusammengesetzt ist, und eine Scheitelbewehrung (2) aufweist, die aus mindestens zwei sogenannten Arbeitslagen (21, 22) aus undehnbaren, gekreuzten Metallseilen und mindestens einer Lage (20) aus Umfangsseilen zusammengesetzt ist, die zwischen der äußersten Lage (1) aus Radialseilen und der ersten, radial am weitesten innenliegenden Scheitel-Arbeitslage (21) angeordnet ist, wobei die genannte Lage aus Umfangsseilen (20) Enden axial jenseits der Enden der Arbeitslagen (21, 22) aufweist und wobei die genannte Scheitelbewehrung (2) von einem Laufband (10) mit der Breite L überdeckt ist, **dadurch gekennzeichnet, daß** zwischen der Lage aus Umfangsseilen (20) mit einer Breite L20, die zwischen 0,8 und 0,95 L liegt, und der ersten, radial am weitesten innenliegenden Arbeitslage (21) mit einer Breite L21, die zwischen 0,5 und 0,7 L liegt, eine Schicht aus gummiartiger Mischung (4) mit niedrigem Dehnungsmodul, einer konstanten Dicke, die zwischen 2 und 3 mm liegt, und mit einer Breite LM, die gleich ist L 21, angeordnet ist, und daß dann die zweite, radial am weitesten außenliegende Arbeitslage (22) mit einer axialen Breite L22, die größer ist als die Breite L 21, radial vom Rand der Lage aus Umfangsseilen (20) einerseits durch ein Gummipolster (5) mit hohem Dehnungsmodul, das sich axial vom Ende der ersten Arbeitslage (21) jenseits des Endes der Lage aus Umfangsseilen (20), mit einer Dicke, die praktisch gleich ist der Gesamtdicke der ersten Arbeitslage (21) und der Schicht aus Gummi (4) mit niedrigem Modul, und anderseits radial auf der Außenseite des genannten Polsters (5) durch einen Keil aus Gummi (6) mit mittlerem Modul zwischen dem niedrigen Modul und dem hohen Modul getrennt ist, der sich axial im wesentlichen vom Rand der zweiten Arbeitslage (22) bis zu einem Punkt axial auf der Innenseite des Endes der ersten Arbeitslage (21) erstreckt, und zwar um ein Maß, das zwischen dem 0,03-fachen und dem 0,10-fachen der Breite L21 liegt, wobei der genannte Keil (6) das Entkoppeln der Ränder der Arbeitslagen (21) und (22) gestattet.

2. Reifen nach Anspruch 1, **dadurch gekennzeichnet, daß** die Scheitelbewehrung (2) durch die Anwesenheit, radial über der zweiten, radial am weitesten außenliegenden Arbeitslage (22), einer Lage (23) aus elastischen Seilen vervollständigt ist, die in der selben Richtung ausgerichtet sind wie die der Seile der zweiten, darunter benachbarten Arbeitslage (22), aber mit einer Breite L23, die größer als L22 und kleiner als L20 ist, wobei die genannte Schutzlage (23) dann vom Polster (5) durch einen Keil aus gummiartiger Mischung (7) mit niedrigem Dehnungsmodul getrennt ist, der identisch zum Modul der gummiartigen Schicht (4) ist, die zwischen der Lage aus Umfangsseilen

## Claims

1. A tyre, of form ratio H/S of < 0.60, principally comprising a carcass reinforcement composed of at least one ply (1) of radial cables, a crown reinforcement (2) composed of at least two so-called working plies (21, 22) of crossed inextensible metal cables, and at least one ply (20) of circumferential cables which is arranged between the outermost ply (1) of radial cables and the first, radially innermost, working crown ply (21), said ply of circumferential cables (20) having ends axially beyond the ends of the working plies (21, 22) and said crown reinforcement (2) being surmounted by a tread (10) of width L, **characterised in that** there is arranged between the ply of circumferential cables (20), of a width L20 of between 0.8 and 0.95 L, and the first, radially innermost, working ply (21), of a width L21 of between 0.5 and 0.7 L, a layer of rubber mix (4) of low modulus of extension, of constant thickness of between 2 and 3 mm and having a width LM equal to L21, whilst the second, radially outermost, working ply (22), of axial width L22, which is greater than the width L21, is separated radially from the edge of the ply of circumferential cables (20), firstly by a rubber cushion (5) of a high modulus of extension, extending axially from the end of the first working ply (21) beyond the end of the ply of circumferential cables (20), of a thickness practically equal to the total thickness of the first working ply (21) and of the layer of rubber (4) of low modulus, and secondly, radially to the outside of said cushion (5), by a wedge of rubber (6) of a modulus which is intermediate between the low modulus and the high modulus and extends axially substantially from the edge of the second working ply (22) to a point axially to the inside of the end of the first working ply (21) by a quantity of between 0.03 and 0.10 times the width L21, said wedge (6) permitting the uncoupling of the edges of the working plies (21) and (22).

2. A tyre according to Claim 1, **characterised in that** the crown reinforcement (2) is completed by the presence, radially above the second, radially outermost, working ply (22), of a ply (23) of elastic cables which are oriented in the same direction as that of the cables of the subjacent second working ply (22), but of axial width L23 greater than L22 and less than L20, said protective ply (23) then being separated from the cushion (5) by a wedge of rubber mix (7) of low modulus of extension, identical to the modulus of the rubber layer (4) located between the ply of circumferential cables (20) and the first, radially innermost, working ply (21).
